# EUROPÄISCHE PATENTANMELDUNG

(11) **EP 3 489 393 A1**
(43) Veröffentlichungstag der Anmeldung: **29.05.2019**
(21) Anmeldenummer: 17203521.4
(22) Anmeldetag: 24.11.2017
(51) Int. Cl.: C25B 9/04, C25B 9/20, C25B 15/08

(54) **VERBINDUNGSELEMENT ZUM ELEKTRISCHEN UND MECHANISCHEN VERBINDEN ZWEIER ELEKTROLYSEZELLENSTAPEL UND ELEKTROLYSEVORRICHTUNG**

(71) Anmelder: Siemens Aktiengesellschaft, 80333 München (DE)
(72) Erfinder: Wolf, Erik, 91341 Röttenbach (DE)

(57) **Zusammenfassung**

Die Erfindung betrifft ein Verbindungselement (2, 7, 8, 41) zum elektrischen und mechanischen Verbinden zweier Elektrolysezellenstapel (3, 4, 5). Die Erfindung betrifft zudem eine Elektrolysevorrichtung (1, 40) mit mindestens einem derartigen Verbindungselement (2, 7, 8, 41) und den mit diesem verbundenen Elektrolysezellenstapeln (3, 4, 5). Das Verbindungselement (2, 7, 8, 41) weist zum hydraulischen Anschließen der Elektrolysezellenstapel (3, 4, 5) für zwei voneinander unabhängige Wasserkreisläufe jeweils wenigstens zwei hydraulische Schnittstellen (14, 28, 29, 31, 33, 36, 37) auf. Weiter weist das Verbindungselement (2, 7, 8, 41) elektrisch leitend miteinander verbundene elektrische Anschlüsse (10) auf, um die Elektrolysezellenstapel (3, 4, 5) in einem gemeinsamen Stromkreis zu verbinden. Das Verbindungselement (2, 7, 8, 41) kann je nach Ausgestaltung die angeschlossenen Elektrolysezellenstapel (3, 4, 5) hydraulisch separieren oder miteinander verbinden.

## Beschreibung

Die Erfindung betrifft ein Verbindungselement zum elektrischen und mechanischen Verbinden zweier Elektrolysezellenstapel sowie eine Elektrolysevorrichtung mit einem derartigen Verbindungselement.

Die Elektrolyse ist ein heutzutage in verschiedenen Bereichen vielfach angewendetes Verfahren, bei dem beispielsweise durch einen elektrischen Strom Wasser zur Gewinnung von Wasserstoff und Sauerstoff aufgespalten wird. Die Elektrolyse findet dabei üblicherweise in Elektrolysezellen statt, wobei mehrere Elektrolysezellen zu einem Modul zusammengefasst sein können. Eine Vielzahl von Elektrolysezellen beziehungsweise eine Mehrzahl von Modulen können zu einem sogenannten Elektrolysezellenstapel (englisch "stack") zusammengefasst sein.

Elektrolysezellen sind Niederspannungs-Hochstrom-Verbraucher. Eine typische Spannungslage einer einzelnen Elektrolysezelle beziehungsweise ein typischer Spannungsabfall über eine einzelne Elektrolysezelle im Betrieb kann typisch im Bereich von 1,8 V_{DC} bis 2,6 V_{DC} liegen, also beispielsweise 2V_{DC} betragen. Im Betrieb, das heißt bei der Elektrolyse, skaliert ein tatsächlicher Strombedarf mit einer aktiven Fläche der jeweiligen Elektrolysezelle, wobei der Strombedarf beispielsweise 1 bis 2 Ampere pro Quadratzentimeter (A/cm²) betragen kann. Es sind heutzutage Elektrolysezellen mit einer aktiven Fläche von mehr als 1000 cm² verfügbar und für die Zukunft sind Elektrolysezellen mit einer aktiven Fläche von etwa 10.000 cm² geplant. Somit kann der Strombedarf für derartige Elektrolysezellen einige 10.000 A erreichen. Elektrolysezellen beziehungsweise entsprechende Elektrolyseanlagen oder - vorrichtungen werden oftmals mit Gleichspannung betrieben, die aus gleichgerichteter Wechselspannung erzeugt wird. Dafür werden oftmals Gleichrichter verwendet, die als funktionale Bauteile Leistungshalbleiter nutzen, deren spezifische Kosten üblicherweise von ihrer Stromtragfähigkeit dominiert werden. Die maßgebliche Kennzahl für einen Gleichrichter ist bei einer Verwendung zur Elektrolyse also der jeweilige Preis pro Ampere Gleichstrom. Ein typischer Spannungsbereich oder eine typische Spannungslage entsprechender Gleichrichter kann beispielsweise 1200-1500 V_{DC} sein.

Grundsätzlich wäre es also vorteilhaft, viele Elektrolysezellen elektrisch in Reihe zu schalten, da so die maximal mögliche Spannungslage des jeweiligen vorgeschalteten Gleichrichters ausgenutzt und damit die Effizienz des jeweiligen Elektrolyseurs, also der jeweiligen Elektrolysevorrichtung, verbessert beziehungsweise optimiert werden kann. Für praktische Anwendungen ist jedoch eine mit vertretbarem Aufwand realisierbare Baulänge eines einzelnen Elektrolysezellenstapels mechanisch limitiert. Es können also nicht beliebig viele, sondern nur eine durch die handhabbare mechanische Stabilität des Elektrolysezellenstapels vorgegebene Anzahl von einzelnen Elektrolysezellen in einem Elektrolysezellenstapel zusammengefasst werden. Bei einer größeren Baulänge, also einer größeren Anzahl von zusammengefassten Elektrolysezellen, kann es zu einem Ausscheren der Elektrolysezellen beziehungsweise zu einem Knicken des Elektrolysezellenstapels kommen, vergleichbar zu den Eulerschen Knickfällen. Dieses Problem tritt auf, da die einzelnen Elektrolysezellen eines Elektrolysezellenstapels mechanisch miteinander verspannt werden, wobei in Stapelrichtung, also in Richtung oder entlang einer zu den parallelen Haupterstreckungsebenen der einzelnen Elektrolysezellen senkrecht verlaufenden Stapelachse, abhängig von einem Druck-Flächen-Verhältnis Druckbelastungen in der Größenordnung von einigen 10 t auftreten beziehungsweise verwendet werden können. Ein weiteres, die Anzahl von in einem Elektrolysezellenstapel in Reihe schaltbarer beziehungsweise anordenbarer Elektrolysezellen begrenzendes Problem liegt in den Fertigungstoleranzen, beispielsweise jeweiliger Rahmen der einzelnen Elektrolysezellen. Die für die entsprechenden Rahmendicken mit vertretbarem Aufwand erreichbaren Toleranzen können sich durch das Zusammenfassen der Vielzahl von Elektrolysezellen in dem Elektrolysezellenstapel in einer Toleranzkette aufsummieren. So können ab einer gewissen Anzahl von Elektrolysezellen insgesamt Werte beziehungsweise Abweichungen erreicht werden, die nicht mehr toleriert werden können.

In heutigen Elektrolyseanlagen wird die baulich-mechanische Limitierung der Länge der Elektrolysezellenstapel beziehungsweise der entsprechenden Anzahl von zusammenfassbaren Elektrolysezellen und die damit einhergehende nicht-optimale Ausnutzung der von üblichen Gleichrichtern bereitstellbaren Spannung mit der damit einhergehende relativ geringen Effizienz sowie dem ebenfalls damit einhergehenden zusätzlichen Bauteil- und Kostenaufwand schlicht akzeptiert.

Aufgabe der vorliegenden Erfindung ist es, einen gegenüber herkömmlichen Elektrolyseanlagen effizienteren Elektrolysebetrieb zu ermöglichen.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in den Zeichnungen angegeben.

Ein erfindungsgemäßes Verbindungselement dient zum elektrischen und mechanischen Verbinden zweier Elektrolysezellenstapel. Das Verbindungselement weist einen starren Grundkörper auf, der seinerseits zum hydraulischen Anschließen wenigstens eines der Elektrolysezellenstapel für einen ersten Wasserkreislauf einen ersten Zulauf und einen ersten Ablauf und für einen von dem ersten Wasserkreislauf unabhängigen zweiten Wasserkreislauf einen zweiten Zulauf und einen zweiten Ablauf aufweist. Das Verbindungselement weist also in Form der Zuläufe und Abläufe wenigstens vier hydraulische Anschlüsse oder Schnittstellen für insgesamt wenigstens zwei getrennte Wasserkreisläufe auf. Beispielsweise können der eine Wasserkreislauf zum Gewinnen von Wasserstoffgas und der andere Wasserkreislauf zum Gewinnen von Sauerstoffgas dienen. Durch die Trennung der Wasserkreisläufe kann dann vorteilhaft eine separate Wasserversorgung mit jeweils angepasster Förderung oder angepasstem Zufluss und Abfluss und/oder angepasster Konditionierung oder Aufbereitung realisiert werden.

Das Verbindungselement weist zudem elektrisch leitend miteinander verbundene elektrische Anschlüsse zum elektrischen Anschließen der zwei Elektrolysezellenstapel auf. Das Verbindungselement bildet bei an die elektrischen Anschlüsse angeschlossenen Elektrolysezellenstapeln eine elektrische Verbindung der beiden Elektrolysezellenstapel in einem gemeinsamen Stromkreis. Je nach Auslegung und Bedarf kann zum Anschließen jeweils eines Elektrolysezellenstapels ein elektrischer Anschluss oder eine elektrische Verbindung vorgesehen sein oder es können je Elektrolysezellenstapel mehrere elektrische Anschlüsse oder Verbindungen vorgesehen sein. Jedenfalls können durch das Verbindungselement an dieses angeschlossene Elektrolysezellenstapel elektrisch miteinander verbunden oder aneinandergekoppelt werden.

Weiterhin weist das Verbindungselement mechanische Verbindungsschnittstellen zum mechanischen Verbinden der Elektrolysezellenstapel mit dem Verbindungselement auf. Die mechanischen Verbindungsschnittstellen sind dabei an einander gegenüberliegenden Seiten des Verbindungselementes angeordnet, sodass bei mechanisch mit den Verbindungsschnittstellen verbundenen Elektrolysezellenstapeln sich deren Stapelachsen parallel zueinander erstrecken. Bevorzugt können die mechanischen Verbindungsschnittstellen derart angeordnet sein, dass die Stapelachsen angeschlossener Elektrolysezellenstapel sich koaxial erstrecken beziehungsweise anordnen, also zusammenfallen. Ebenso kann jedoch eine versetzte Anordnung vorgesehen sein, bei welcher die Elektrolysezellenstapel zwar weiterhin an einander gegenüberliegenden Seiten des Verbindungselementes angeordnet sind, sich ihre Stapelachsen aber echt parallel, also versetzt zueinander erstrecken. Unabhängig von der konkreten Ausgestaltung kann durch die parallele Ausrichtung der Stapelachsen ein platzsparender, besonders einfach raumeffizient mit weiteren, ähnlichen Anordnungen stapelbarer Aufbau erreicht werden. Die mechanischen Verbindungsschnittstellen dienen dazu, die Elektrolysezellenstapel an das Verbindungselement mechanisch anzukoppeln, sodass ein Verbund oder eine Baugruppe aus dem Verbindungselement und dem oder den daran angeschlossenen Elektrolysezellenstapeln, also eine Elektrolysevorrichtung, herstellbar ist.

Bevorzugt können die mechanischen Verbindungsschnittstellen zum Herstellen einer reversiblen mechanischen Verbindung oder Ankopplung der Elektrolysezellenstapel ausgelegt sein. Hierdurch kann vorteilhaft ein modularer, flexibler Aufbau einer Elektrolysevorrichtung oder Elektrolyseanlage realisiert werden. Ebenso kann - beispielsweise für Reparaturzweck - vorteilhaft ein Austausch eines Elektrolysezellenstapels und/ oder des Verbindungselementes erleichtert werden. Die mechanischen Verbindungsschnittstellen können auf verschiedene Arten und Weisen ausgebildet sein, beispielsweise als Steck-, Rast- oder Schraubverbindung beziehungsweise -aufnahme, als Flansch oder Flanschverbindung oder dergleichen mehr. Ebenso kann es möglich sein, die mechanischen Verbindungsschnittstellen mit den elektrischen Anschlüssen zu kombinieren, also in einer elektrisch-mechanischen Schnittstelle oder einem elektrisch-mechanischen Anschluss zu vereinen. Es können auf jeder der einander gegenüberliegenden Seiten des Verbindungselementes, welche zum Anordnen eines Elektrolysezellenstapels vorgesehen sind, jeweils einer oder mehrere derartige kombinierte elektrisch-mechanische Anschlüsse oder Schnittstellen angeordnet sein. Eine kombinierte elektrisch-mechanische Schnittstelle kann vorteilhaft das Verbinden von Elektrolysezellenstapeln mit dem Verbindungselement erleichtern, da weniger separate Schnittstellen korrekt aneinander ausgerichtet werden müssen. Besonders vorteilhaft kann es sein, mehrere mechanische Verbindungsschnittstellen auf jeder der beiden Seiten anzuordnen, um eine stabile, zuverlässige Verbindung zwischen der Elektrolysezellenstapel mit dem Verbindungselement zu ermöglichen, und dabei pro Seite jeweils nur eine dieser Verbindungsschnittstellen als kombinierte elektrisch-mechanische Verbindung oder Schnittstelle auszubilden. Hierdurch können vorteilhaft eine Komplexität sowie ein Bauteil- und Kostenaufwand reduziert werden.

Das erfindungsgemäße Verbindungselement ermöglicht es vorteilhaft, wenigstens zwei Elektrolysezellenstapel elektrisch miteinander zu verbinden, insbesondere elektrisch in Reihe zu schalten beziehungsweise anzuordnen. Dadurch kann vorteilhaft die von einem zum Betreiben der Elektrolysezellenstapel vorgesehenen Gleichrichter bereitgestellte Spannung beziehungsweise Spannungslage verbessert ausgenutzt werden, da elektrisch effektiv eine größere Anzahl von Elektrolysezellen, insbesondere seriell, miteinander verbunden beziehungsweise verschaltet werden kann als in einem einzigen Elektrolysezellenstapel angeordnet sind beziehungsweise angeordnet werden können. Das Verbindungselement ermöglicht es vorteilhaft also, durch ein Verschalten oder Verbinden von Elektrolysezellenstapeln beziehungsweise Modulen die Spannungslage eines sich ergebenden Gesamtverbandes oder Gesamtverbundes, also einer Elektrolysevorrichtung, so anzupassen, dass sie optimal mit derjenigen Spannungslage einer Stromversorgung, also etwa des Gleichrichters, übereinstimmt. Dies kann die Effizienz einer mehrere Elektrolysezellenstapel umfassenden Elektrolysevorrichtung oder Elektrolyseanlage verbessern, insbesondere hinsichtlich eines reduzierten Kosten-, Bauteil- und Wartungsaufwandes ebenso wie hinsichtlich einer elektrischen Energieeffizienz.

Hierzu trägt neben der verbesserten Ausnutzung der Spannungslage oder Spannungshöhe auch bei, dass eine weniger aufwändige Stromversorgung, also beispielsweise weniger Gleichrichter, benötigt werden, wodurch Energieverluste reduziert werden können. Besonders vorteilhaft können diese Effekte durch den Einsatz des Verbindungselementes realisiert werden, ohne die Länge der einzelnen Elektrolysezellenstapel beziehungsweise die Anzahl der jeweils darin verbauten Elektrolysezellen zu erhöhen, das heißt also ohne die mechanische Stabilität der Elektrolysezellenstapel zu reduzieren oder zu gefährden.

Im Gegensatz zu bisherigen Elektrolyseanlagen, bei denen mehrere Elektrolysezellenstapel unabhängig voneinander angeordnet und betrieben werden, kann durch das erfindungsgemäße Verbindungselement vorteilhaft besonders einfach, platzsparend und sicher eine definierte und feste räumliche Ausrichtung der Elektrolysezellenstapel zueinander erreicht werden, was ein Auffangen oder Sammeln von erzeugtem Gas, beispielsweise von erzeugtem Wasserstoff und Sauerstoff vereinfachen kann. Insbesondere kann so besonders einfach beispielsweise in beiden oder allen Elektrolysezellenstapeln erzeugtes Wasserstoffgas in einem gemeinsamen ersten Sammelbehälter oder Sammelsystem und in beiden oder allen Elektrolysezellenstapeln erzeugtes Sauerstoffgas in einem gemeinsamen zweiten Sammelbehälter oder Sammelsystem aufgefangen werden. Da zudem eine separate elektrische Energieversorgung der einzelnen Elektrolysezellenstapel entfallen kann, kann durch das erfindungsgemäße Verbindungselement insgesamt eine Komplexität einer Elektrolysevorrichtung oder -anlage mit mehreren Elektrolysezellenstapeln reduziert und somit auch deren Handhabbarkeit verbessert werden.

Das Verbindungselement kann zudem vorteilhaft eine zentrale, sichere Zugangsstelle zu einem elektrischen System aller angeschlossenen Elektrolysezellenstapel bieten. Besonders vorteilhaft ist dabei, dass bei einer Interaktion mit diesem Zugang, beispielsweise zum Anschließen einer externen Energieversorgung, nicht mit den unter mechanischer Spannung stehenden Elektrolysezellenstapeln selbst interagiert werden muss. Durch das Verbindungselement kann also auf besonders einfache Art und Weise eine Gefahr von Beschädigungen der Elektrolysezellenstapel, beispielsweise eine Gefahr, ein Leck zu verursachen, ebenso reduziert werden, wie die Gefahr einer Verletzung jeweiligen Bedien- oder Wartungspersonals.

Ein weiterer Vorteil des erfindungsgemäßen Verbindungselements besteht darin, dass eine Anzahl von externen elektrischen und/oder hydraulischen Schnittstellen, welche zum Betreiben mehrerer Elektrolysezellenstapel benötigt werden beziehungsweise zugänglich gemacht werden müssen reduziert werden kann, da in dem Verbindungselement ein gebündelter Zugang zu den entsprechenden elektrischen und/oder hydraulischen Systemen der angeschlossenen Elektrolysezellenstapel realisiert werden kann.

Ein weiterer Vorteil der vorliegenden Erfindung liegt in der durch dieser ermöglichten Skalierbarkeit von Elektrolyseanlagen. Eine solche Skalierung wird dabei mit besonders geringem Aufwand ermöglicht, da vereinfachte, standardisierte und einheitliche Elektrolysezellenstapel bedarfsgerecht flexibel und modular in beliebiger Anzahl miteinander gekoppelt werden können, wobei ein Verbindungs-oder Anschlussaufwand, also ein Infrastrukturaufwand, gegenüber der bisher üblichen konventionellen Herangehensweise reduziert werden kann. Es kann beispielsweise möglich sein, durch die Verwendung mehrerer Verbindungselemente mehr als zwei Elektrolysezellenstapel seriell aneinander zu koppeln beziehungsweise miteinander elektrisch zu verschalten. Dafür kann beispielsweise eine abwechselnde Anordnung von Elektrolysezellenstapeln und Verbindungselementen vorgesehen sein. Damit ergibt sich die Abfolge Elektrolysezellenstapel, Verbindungselement, Elektrolysezellenstapel, Verbindungselement, Elektrolysezellenstapel, usw.

Ebenso kann eine Skalierung in Querrichtung möglich sein, bei der beispielsweise zwei oder mehr Elektrolysezellenstapel nebeneinander an jeder der einander gegenüberliegenden Seiten des Verbindungselementes an dieses angeschlossen beziehungsweise mit diesem verbunden werden können. So kann eine besonders raumeffiziente Anordnung und/oder eine Kombination aus einer Reihen- und einer Parallelschaltung von Elektrolysezellenstapeln über das gemeinsame Verbindungselement realisiert werden. Auch hier kann eine derartige Anordnung gegenüber einer individuellen Handhabung und Kontaktierung einzelner Elektrolysezellenstapel vereinfacht werden, da die entsprechenden elektrischen und/oder hydraulischen Verschaltungen oder Verbindungen bereits in dem Verbindungselement realisiert sein können, sodass zum Herstellen der gewünschten Anordnung beziehungsweise Verschaltung lediglich die Elektrolysezellenstapel mit dem Verbindungselement verbunden und nicht individuell kontaktiert werden müssen.

Gerade für Elektrolyseanlagen, in denen eine Vielzahl von Elektrolysezellenstapeln betrieben wird, kann das Verbindungselement beziehungsweise können die jeweiligen Verbindungselemente zudem vorteilhaft zum Ausgleichen von Toleranzen verwendet werden. Dazu kann das Verbindungselement beispielsweise eine Dämpfung oder ein flexibles Element, beispielsweise eine an wenigstens einer den einander gegenüberliegenden, zum Verbinden der Elektrolysezellenstapel vorgesehenen Seiten, angeordnete Gummimanschette oder dergleichen aufweisen. Dies kann vorteilhaft einen Toleranzausgleich ermöglichen, ohne eine mechanische Stabilität der einzelnen Elektrolysezellenstapel zu verringern und/oder deren Herstellungsaufwand zu vergrößern. Zusätzlich oder alternativ können die hydraulischen Schnittstellen, also die Zuläufe und Abläufe, als flexible Schlauchelemente ausgebildet oder auf Seiten des Verbindungselementes mit flexiblen Schlauchelementen verbunden sein. Diese Schlauchelemente können beweglich an dem Grundkörper des Verbindungselementes befestigt sein. Der Grundkörper kann dabei jeweilige Ausnehmungen oder Taschen zum Aufnehmen der Schlauchelemente aufweisen. Die Schlauchelemente können an ihrem jeweiligen, dem Grundkörper zugewandten Ende mit starren, in dem Grundkörper geführten oder verlaufenden Rohrleitungen verbunden sein.

Im Sinne der vorliegenden Erfindung beziehungsweise in der vorliegenden Beschreibung ist das mehrfach genannte Wasser stellvertretend für ein beliebiges Elektrolyse-Fluid zu verstehen und auch entsprechende Wasserleitungen, Wasserkreisläufe, Hydraulikanschlüsse und dergleichen sind nicht auf die Durchleitung oder Verwendung von Wasser beschränkt. Die verwendeten Begriffe "Hydraulik" und "hydraulisch" sowie deren Varianten geben jeweils den Bezug zu einem entsprechenden Fluidsystem der vorliegenden Erfindung beziehungsweise einer entsprechenden Verwendung an und beziehen sich nicht etwa auf Einrichtungen zur hydraulischen Kraftübertragung, hydraulische Getriebe oder dergleichen. Eine hydraulische Schnittstelle ist in diesem Sinne also beispielsweise ein Rohrleitungsanschluss durch den Wasser hindurch fließen oder geleitet werden kann. Das hydraulische System des Verbindungselements oder einer unter Verwendung des Verbindungselementes realisierten Anlage oder Anordnung kann dementsprechend beispielsweise deren hydraulische Schnittstellen, Wasseranschlüsse, Wasserleitungen, Rohrleitungen, Reservoire und dergleichen umfassen.

Des Weiteren können die hierin genannten Zuläufe und Abläufe gemeinsam als hydraulische Schnittstellen bezeichnet werden. Durch eine üblicherweise mögliche Umkehr der jeweiligen Strömungsrichtung kann ein Zulauf zu einem Ablauf werden und umgekehrt. Eine solche Umkehr kann für einen oder beide Wasserkreisläufe unabhängig voneinander möglich sein. Dementsprechend kann eine bisher und im Folgenden als Zulauf bezeichnete hydraulische Schnittstelle ebenso als Ablauf fungieren und eine als Ablauf bezeichnete hydraulische Schnittstelle als Zulauf.

In vorteilhafter Ausgestaltung der vorliegenden Erfindung weist das Verbindungselement für jeden Wasserkreislauf wenigstens einen mit diesem durch eine Rohrleitung verbundenen hydraulischen Externanschluss zum Anschließen einer externen, von den Elektrolysezellenstapeln verschiedenen Wasserleitung auf.

Zum dauerhaften Betreiben der Elektrolyse muss üblicherweise das entsprechende Fluid, hier also beispielsweise das Wasser, regelmäßig oder kontinuierlich von einer externen Quelle nachgeführt und aus den Elektrolysezellenstapeln abgeführt werden. Dies kann vorteilhaft über die Externanschlüsse, also die externen Anschlüsse des Verbindungselements, erfolgen, über welche also ein Austausch des Wassers zwischen dem Verbindungselement, insbesondere einem Leitungssystem oder Hydrauliksystem des Verbindungselements, und einer externen Quelle oder Umgebung durchführbar ist. Es kann also beispielsweise von der jeweiligen externen Quelle oder über die externe Wasserleitung durch oder über einen Externanschluss Wasser in den das Verbindungselement beziehungsweise in das Hydraulik- oder Leitungssystem des Verbindungselements geleitet werden und hierüber in einen der Wasserkreisläufe gelangen.

Diesem Weg folgend, kann das Wasser dann über einen Ablauf des Verbindungselements in einen angeschlossenen Elektrolysezellenstapel geleitet werden. Nachdem das Wasser den Elektrolysezellenstapel durchlaufen hat, kann es über einen Zulauf des Verbindungselements zurück in dieses gelangen. Anschließend kann das Wasser über einen weiteren Externanschluss in eine externe Wasserleitung abgeführt werden, beispielsweise um einer Aufbereitung oder Entsorgung und/oder dem Elektrolysezellenstapel erneut zugeführt zu werden. Ohne den beziehungsweise die externen Anschlüsse des Verbindungselements könnte beziehungsweise müsste zum dauerhaften Betreiben der Elektrolyse das Wasser beziehungsweise das jeweilige Elektrolyse-Fluid beispielsweise direkt über einen entsprechenden Anschluss beziehungsweise eine entsprechende Hydraulikschnittstelle des jeweiligen Elektrolysezellenstapels diesem zugeführt werden. Durch die hier beschriebene Ausgestaltung des Verbindungselements kann vorteilhaft also die Wasser- beziehungsweise Wasserversorgung der Elektrolysezellenstapel zentral und damit gegebenenfalls besonders einfach zugänglich und sicher, also gefährdungsarm, an dem Verbindungselement angeordnet beziehungsweise über das Verbindungselement realisiert werden.

Der jeweilige Externanschluss kann dabei einer der Zuläufe und/oder Abläufe, also mit einem der Zuläufe und/oder Abläufe des jeweiligen Wasserkreislaufs identisch sein. Beispielsweise kann der erste Zulauf ein Externanschluss, also als Externanschluss ausgebildet sein. Zusätzlich oder alternativ kann beispielsweise der zweite Ablauf ein solcher Externanschluss sein.

Ebenso kann aber für einen oder beide Wasserkreisläufe jeweils zusätzlich zu dem jeweiligen Zulauf und Ablauf wenigstens ein Externanschluss vorgesehen sein. Beispielsweise kann ein solcher zusätzlicher Externanschluss für jeden Zulauf und Ablauf, über welchen beim Verbinden eines Elektrolysezellenstapels ein hydraulischer Kontakt beziehungsweise eine hydraulische Verbindung zwischen diesem Elektrolysezellenstapel und dem Verbindungselement hergestellt wird, vorgesehen sein. Mit anderen Worten dienen dann die Zuläufe und Abläufe des Verbindungselements als Übergang für ein Fluid, insbesondere das für die Elektrolyse verwendete Wasser, zwischen dem Verbindungselement und dem jeweiligen Elektrolysezellenstapel, während die Externanschlüsse eine jeweilige hydraulische Schnittstelle zu einem externen, also sowohl von dem Verbindungselement als auch von den Elektrolysezellenstapeln verschiedenen, hydraulischen System oder Leitungssystem bilden.

In vorteilhafter Ausgestaltung der vorliegenden Erfindung ist das Verbindungselement als Endelement oder Endkappe für einen ersten der beiden Elektrolysezellenstapel ausgebildet. Die diesem Elektrolysezellenstapel zugeordneten elektrischen Anschlüsse und mechanischen Verbindungsschnittstellen sind dabei zum direkten Anschließen beziehungsweise Verbinden dieses Elektrolysezellenstapels mit dem Verbindungselement ausgebildet. Die dem zweiten der beiden Elektrolysezellenstapel zugeordneten elektrischen Anschlüsse und mechanischen Verbindungsschnittstellen sind zum Anschließen beziehungsweise Verbinden mit einem als Endelement oder Endkappe des zweiten Elektrolysezellenstapels dienenden, baugleichen Verbindungselement ausgebildet.

Bei durch das Verbindungselement miteinander verbundenen oder gekoppelten Elektrolysezellenstapeln ist mit anderen Worten also lediglich einer der beiden Elektrolysezellenstapel direkt mit dem Verbindungselement verbunden, während der andere Elektrolysezellenstapel indirekt, also mittelbar über ein weiteres, baugleiches Verbindungselement indirekt mit demjenigen Verbindungselement verbunden beziehungsweise gekoppelt ist, an welches der zuvor genannte Elektrolysezellenstapel direkt, also unmittelbar angeschlossen ist. Bei einer derartigen Anordnung ergibt sich entlang der Stapelachsen betrachtet also die Abfolge Elektrolysezellenstapel, Verbindungselement, Verbindungselement, Elektrolysezellenstapel. Ein derartiger Verbund kann also eine Spiegel- oder Symmetrieebene aufweisen, welche ich senkrecht zu den Stapelachsen zwischen den beiden Verbindungselementen beziehungsweise in deren Kontaktfläche oder Kontaktebene erstreckt. Die beiden Elektrolysezellenstapel werden also auch hierbei elektrisch und mechanisch miteinander verbunden, wobei die beiden Verbindungselemente gemeinsam als zweigeteiltes Verbindungselement aufgefasst werden können.

Ein Vorteil einer solchen geteilten, modularen Bauweise kann darin liegen, dass jeder Elektrolysezellenstapel routinemäßig mit einem Verbindungselement als Endelement oder Endkappe ausgestattet, also abgeschlossen werden kann. Aus derartigen Verbündeten aus jeweils einem Elektrolysezellenstapel und einem daran angeordneten Verbindungselement kann dann eine größere oder komplexere Elektrolyseanlage flexibel und modular mit vereinfachter Logistik aufgebaut werden, da keine separate Installation von Elektrolysezellenstapeln und Verbindungselementen vor Ort notwendig ist, sondern lediglich die gleichartigen Endstücke der Verbünde gekoppelt werden müssen. Zudem kann durch Anordnung eines solchen Verbindungselementes als Endelement oder Endstück an einem Elektrolysezellenstapel dieser vorteilhaft beispielsweise bereits während eines Transportes oder eines Installationsvorgangs vor Beschädigungen geschützt werden.

In einer besonders vorteilhaften Weiterbildung der Erfindung sind die Zuläufe und Abläufe, also die hydraulischen Schnittstellen, des ersten und des zweiten Wasserkreislaufs dem ersten Elektrolysezellenstapel zugeordnet, sodass das Verbindungselement bei mit diesem verbundenen Elektrolysezellenstapeln nur von Wasser des ersten Elektrolysezellenstapels durchströmbar ist und dadurch eine hydraulische Trennung zwischen den Elektrolysezellenstapeln bildet. Mit anderen Worten dienen also die Zuläufe und Abläufe beider Wasserkreisläufe zum Zuführen beziehungsweise Abführen von Wasser zu beziehungsweise von dem ersten Elektrolysezellenstapel. Weder der erste noch der zweite Wasserkreislauf stehen also in hydraulischer Verbindung mit dem zweiten Elektrolysezellenstapel oder dessen Wasserkreisläufen. Durch das hydraulische System des Verbindungselements wird also auch bei zwei angeschlossenen Elektrolysezellenstapeln keine hydraulische, also Wasserleitende oder wasserführende Verbindung zwischen den jeweiligen hydraulischen Systemen der mit dem Verbindungselement verbundenen Elektrolysezellenstapel hergestellt.

Die beiden Zuläufe und Abläufe der beiden Wasserkreisläufe können als hydraulische Schnittstellen zwischen dem Verbindungselement und dem ersten Elektrolysezellenstapel vorgesehen sein. Dazu können bevorzugt die Zuläufe und Abläufe beider Wasserkreisläufe an einer einzigen Seite des Verbindungselements angeordnet sein, um eine möglichst einfache hydraulische Verbindung des Elektrolysezellenstapels mit dem Verbindungselement zu ermöglichen. Wenigstens ein Externanschluss kann selbstverständlich auch in dieser Ausführungsform zusätzlich vorgesehen sein. Ebenso können beispielsweise der erste Zulauf oder Ablauf und der zweite Zulauf oder Ablauf als Externanschlüsse ausgebildet sein.

Mittels eines als hydraulische Trennung oder als hydraulisches Trennelement zwischen mit ihm verbundenen Elektrolysezellenstapeln dienenden Verbindungselements ist es also möglich, mehrere Elektrolysezellenstapel elektrisch und mechanisch miteinander zu verbinden aber gleichzeitig hydraulisch zu separieren. Dies kann besonders vorteilhaft einen Einsatz beziehungsweise eine Anwendung der vorliegenden Erfindung in einem selbstfördernden Elektrolyseur ermöglichen.

In einem selbstfördernden Elektrolyseur, also bei der selbstfördernden Elektrolyse, wird ein beispielsweise durch die Wasserspaltung prozessbedingt entstehender Gasstrom zum Ansaugen oder Nachfördern von weiterem für den Prozess, also die fortgesetzte, kontinuierliche Elektrolyse, benötigtem Wasser genutzt. Der der Elektrolyse inhärente Gaserzeugungsprozess treibt also den jeweiligen Wasserkreislauf, das heißt das Ansaugen oder Nachfördern und das entsprechende Abführen oder Ausfördern des Wassers eigenständig an, ohne dass eine Pumpe benötigt wird.

Die Anwendung der selbstfördernden Elektrolyse ist jedoch nur für eine relativ begrenzte Anzahl von in Reihe geschalteten Elektrolysezellen möglich, wobei diese Anzahl von Elektrolysezellen insbesondere geringer ist als die Anzahl der in den beiden mittels des Verbindungselementes verbundenen Elektrolysezellenstapeln insgesamt vorhandenen Elektrolysezellen. Ein Elektrolysezellenstapel kann beispielsweise 250 Elektrolysezellen aufweisen, die beispielsweise in fünf Modulen zu je 50 Elektrolysezellen organisiert beziehungsweise angeordnet sein können. Die selbstfördernde Elektrolyse kann nach heutigem Stand der Technik demgegenüber beispielsweise für 2 bis 100 hydraulisch in Reihe geschaltete Elektrolysezellen erfolgreich angewendet werden. Dies ist darauf zurückzuführen, dass technisch bedingte Asymmetrien in einem Strömungsfeld der Wasserströmung beziehungsweise des Wasserkreislaufs zwischen den Zellen ebenso wie ein mit steigender Anzahl von Elektrolysezellen zunehmender Strömungswiderstand, insbesondere im Ansaugbereich, zu technischen Problemen führen. Dies können beispielsweise ein Wassermangel, eine lokale Überhitzung durch zu hohe Stromdichten oder eine lokale Abkühlung bis unterhalb einer minimalen effizienten Betriebstemperatur sein. Aus diesen Gründen werden für bekannte selbstfördernde Elektrolyseure bisher Elektrolysezellenstapel oder Module mit einer relativ geringen, für die selbstfördernde Elektrolyse geeigneten Anzahl von Elektrolysezellen verwendet, um entsprechende kritische Zustände zu vermeiden. Damit einher geht die Notwendigkeit einer jeweils separaten Stromversorgung und Ausstattung mit hydraulischen Schnittstellen. Dies wiederum führt bisher zu einem hohen technischen und finanziellen Aufwand und einer geringen Effizienz, da durch die geringe Anzahl von Elektrolysezellen auch ein Gesamtspannungsabfall über alle Elektrolysezellen hinweg nicht zufriedenstellend an eine an der elektrischen Versorgung bereitgestellte Spannungshöhe angepasst werden kann. Werden beispielsweise 50 Elektrolysezellen mit einem Spannungsabfall von jeweils 2 V zusammengefasst, so ergibt sich über den gesamten Verbund hinweg lediglich eine Spannungshöhe von ca. 100 V, was weit von einer Ausnutzung der von der elektrischen Versorgung bereitstellbaren Spannungshöhe von beispielsweise 1500 V entfernt ist. Die vorliegende Erfindung ermöglicht durch das elektrische, serielle Verbinden der Elektrolysezellen bei gleichzeitiger hydraulischer Trennung also vorteilhaft die selbstfördernde Elektrolyse anzuwenden und gleichzeitig eine verbesserte elektrische Effizienz durch eine verbesserte Ausnutzung der von der elektrischen Versorgung bereitgestellten Spannung zu erreichen. Insbesondere wird dies in einer kompakten, besonders einfach zu handhabenden Elektrolysevorrichtung ermöglicht.

Umfasst ein Elektrolysezellenstapel mehr Elektrolysezellen als für eine selbstfördernde Elektrolyse seriell gekoppelt werden können, so können für diesen Elektrolysezellenstapel beispielsweise zwei separate hydraulische System mit jeweils zwei unabhängigen Wasserkreisläufen vorgesehen sein. Dementsprechend können beispielsweise wenigstens zwei hydraulische Schnittstellen des Verbindungselements einem ersten der beiden hydraulischen Systeme und wenigstens zwei weitere hydraulische Schnittstellen des Verbindungselementes einem zweiten der beiden hydraulischen Systeme zugeordnet sein.

In weiterer vorteilhafter Ausgestaltung der vorliegenden Erfindung weist das Verbindungselement zusätzlich einen dritten Zulauf und einen dritten Ablauf, also einen dritten Satz von zwei hydraulischen Schnittstellen, für einen dritten Wasserkreislauf und einen vierten Zulauf und einen vierten Ablauf, also einen vierten Satz von zwei hydraulischen Schnittstellen, für einen vierten Wasserkreislauf auf, wobei alle vier Wasserkreisläufe voneinander unabhängig, also separiert sind. Mit anderen Worten sind also vier Wasserkreisläufe vorgesehen, von denen jeder jeweils einen Zulauf und einen Ablauf, beziehungsweise zwei hydraulische Schnittstellen, aufweist, die jeweils mittels einer jeweiligen Rohrleitung miteinander verbunden sind.

Hier und auch im Sinne anderer Ausführungsformen des erfindungsgemäßen Verbindungselements ist es dabei nicht vorgesehen, dass der jeweilige Wasserkreislauf vollständig als tatsächlich geschlossener Kreislauf Teil des Verbindungselementes selbst ist. Es soll hier lediglich zum Ausdruck gebracht werden, dass erfindungsgemäß das Verbindungselement mehrere separat durch die jeweiligen hydraulischen Schnittstellen zugängliche Rohrleitungsabschnitte, also Teilstücke des hydraulischen Systems aufweist, welche nicht hydraulisch miteinander verbunden sind und daher als Teilstücke oder Abschnitte getrennter, also voneinander unabhängiger Wasserkreisläufe verwendbar sind, beziehungsweise bei angeschlossenen Elektrolysezellenstapeln verwendet werden.

Die hydraulischen Schnittstellen, also die Zuläufe und Abläufe, für den ersten Wasserkreislauf und für den zweiten Wasserkreislauf sind dabei einem ersten der beiden Elektrolysezellenstapel zugeordnet und die hydraulischen Schnittstellen, also die Zuläufe und Abläufe, für den dritten Wasserkreislauf und für den vierten Wasserkreislauf sind einem zweiten der beiden Elektrolysezellenstapel zugeordnet. Eine solche Zuordnung meint dabei, dass bestimmungsgemäß der jeweilige Elektrolysezellenstapel an die ihm zugeordneten hydraulischen Schnittstellen angeschlossen wird, sodass bei angeschlossenem Elektrolysezellenstapel ein entsprechender Wasserkreislauf dieses Elektrolysezellenstapels mit dem entsprechenden, zugeordneten Wasserkreislauf des Verbindungselements hydraulisch verbunden ist.

Somit ist das Verbindungselement bei mit diesem verbundenen Elektrolysezellenstapeln gleichzeitig von Wasser beider Elektrolysezellenstapel durchströmbar und bildet dabei eine hydraulische Trennung zwischen den Elektrolysezellenstapeln. Mit anderen Worten weist das Verbindungselement in diesem Fall also wenigstens acht hydraulische Schnittstellen auf, von denen vier dem einen Elektrolysezellenstapel zugeordnet und/oder mit diesem verbunden und die übrigen vier dem anderen Elektrolysezellenstapel zugeordnet und/oder mit diesem verbunden sind oder werden. Anschaulich kann dies als Kombination oder Vereinigung von zwei hierin an anderer Stelle beschriebenen, jeweils als Endelement oder Endkappe für einen Elektrolysezellenstapel beschriebenen Verbindungselementen mit jeweils vier hydraulischen Schnittstellen aufgefasst werden.

Je nach konkretem Anwendungsfall kann durch ein derartiges monolithisches Verbindungselement mit wenigstens acht hydraulischen Schnittstellen, welches also sämtliche hydraulischen, elektrischen und mechanischen Anschlüsse, Verbindungen und Schnittstellen zum Anschließen von wenigstens zwei Elektrolysezellenstapeln aufweist, beispielsweise ein Austausch eines Elektrolysezellenstapels, etwa für Reparaturzwecke, vereinfacht werden. Dies kann der Fall sein, da beispielsweise für den jeweiligen neuen Elektrolysezellenstapel kein eigenes Verbindungselement benötigt wird oder von dem zu ersetzenden Elektrolysezellenstapel abgelöst werden muss. Durch die monolithische Bauweise des Verbindungselements kann zudem die Anzahl von Verbindungen oder Schnittstellen zwischen separaten Bauteilen reduziert werden, was zu einer reduzierten Anfälligkeit für Undichtigkeiten führen kann.

In einer weiteren vorteilhaften Ausgestaltung der vorliegenden Erfindung weist das Verbindungselement für die beiden Wasserkreisläufe Rohrleitungen auf, die den jeweiligen Zulauf mit dem jeweiligen Ablauf - also die jeweiligen hydraulischen Schnittstellen miteinander - verbinden, sodass bei angeschlossenen Elektrolysezellenstapeln das Verbindungselement dadurch eine hydraulische Verbindung der Elektrolysezellenstapel, beziehungsweise von deren Wasserkreisläufen, bildet oder herstellt. Die Rohrleitungen können das Verbindungselement also vollständig durchgreifen, beispielsweise von einer der beiden einander gegenüberliegenden Seiten zur anderen. Das Verbindungselement kann also beispielsweise an einer Seite zwei Zuläufe oder einen Zulauf und einen Ablauf zum hydraulischen Anschließen eines, also des ersten Elektrolysezellenstapels aufweisen. Auf der anderen Seite kann das Verbindungselement dann dementsprechend zwei Abläufe oder einen Ablauf und einen Zulauf zum hydraulischen Anschließen des anderen, also des zweiten Elektrolysezellenstapels aufweisen. Beispielsweise kann also das Wasser des ersten Wasserkreislaufs, welches aus dem erstem Elektrolysezellenstapel durch den ersten Zulauf in das Verbindungselement gelangt durch die sich daran anschließende Rohrleitung durch den ersten Ablauf aus dem Verbindungselement in den zweiten Elektrolysezellenstapel fließen. Entsprechendes kann, gegebenenfalls auch mit umgekehrter Fließrichtung, für das durch den zweiten Zulauf und den zweiten Ablauf zwischen den beiden Elektrolysezellenstapeln durch das Verbindungselemente fließende Wasser des zweiten Wasserkreislaufs gelten.

Das Verbindungselement stellt in der hier beschriebenen Ausgestaltung also sowohl die elektrische und mechanische Verbindung als auch die hydraulische Verbindung der beiden Elektrolysezellenstapel dar oder her. Mittels des Verbindungselementes können insbesondere mehrere Elektrolysezellenstapel elektrisch und hydraulisch in Reihe geschaltet werden, wodurch vorteilhaft die Effizienz einer entsprechend aufgebauten Elektrolyseanlage erhöht werden kann bei gleichzeitig reduziertem Kosten- und Bauteilaufwand. Es können also effektiv die an anderer Stelle beschriebenen baulich-mechanischen Limitierungen, welche die maximale Länge oder Baulänge, also Elektrolysezellenanzahl eines Elektrolysezellenstapels begrenzen, umgangen werden. Somit kann also elektrisch die maximal mögliche Spannungslage eines vorgeschalteten gleich Richters durch serielles Verschalten von Elektrolysezellenstapeln ausgenutzt, das heißt also eine optimale Spannungsanpassung unabhängig von den baulichen Limitierungen der einzelnen Elektrolysezellenstapel erreicht werden. Durch das hydraulische Verbinden der Elektrolysezellenstapel mittels des Verbindungselementes kann ein durchgehender Wasserkreislauf über mehrere Elektrolysezellenstapel hinweg realisiert werden, wodurch vorteilhaft eine Anzahl von externen hydraulischen Schnittstellen zum Verbinden mit einer externen Wasserversorgung oder einem externen hydraulischen System minimiert werden kann. Damit geht vorteilhaft ebenso eine Minimierung einer Komplexität und eines Installationsaufwandes der gesamten Elektrolyseanlage einher.

In einer Weiterbildung der vorliegenden Erfindung kann das Verbindungselement zusätzlich weitere hydraulische Schnittstellen aufweisen. Dies können beispielsweise ein erster weiterer Zulauf, ein erster weiterer Ablauf, ein zweiter weiterer Zulauf und ein zweiter weiterer Ablauf sein. Dabei kann jeder der somit wenigstens vier Zuläufe mit genau einem der somit wenigstens vier Abläufe durch eine jeweilige Rohrleitung verbunden sein. Auch hier durchgreifen diese Rohrleitungen das Verbindungselement also derart, dass bei an das Verbindungselement angeschlossenen Elektrolysezellenstapeln das Verbindungselement eine hydraulische Verbindung der Wasserkreisläufe des ersten Elektrolysezellenstapels mit den entsprechenden Wasserkreisläufen des zweiten Elektrolysezellenstapels bildet oder herstellt. Das Verbindungselement kann mit anderen Worten also beispielsweise auf der einen Seite zwei Zuläufe und zwei Abläufe zum hydraulischen Anschließen des ersten Elektrolysezellenstapels aufweisen. Auf der anderen, beispielsweise auf der gegenüberliegenden, Seite kann das Verbindungselement dementsprechend zwei Abläufe und zwei Zuläufe zum hydraulischen Verbinden oder Anschließen des zweiten Elektrolysezellenstapels aufweisen. Mit einer solchen Anordnung kann beispielsweise für beide Elektrolysezellenstapel jeweils ein Hin- und Rückfluss durch den Elektrolysezellenstapel für beide unabhängigen Wasserkreisläufe ermöglicht werden. Dies kann beispielsweise dann vorteilhaft sein, wenn an dem Verbindungselement ein jeweiliger zentraler externer Zufluss und Abfluss, also die Verbindung mit einem externen hydraulischen System angeordnet ist. An den jeweiligen, von dem Verbindungselement abgewandten Enden der Elektrolysezellenstapel muss dann vorteilhaft keine hydraulische Schnittstelle vorgesehen sein, wodurch eine besonders einfache platzsparende Installation ermöglicht werden kann. Ebenso kann eine derartige Konfiguration des Verbindungselements beispielsweise zum Anschließen von jeweils zwei Elektrolysezellenstapeln auf jeder Seite verwendet werden, wobei jeder dieser, dann also vier, Elektrolysezellenstapel durch jeweils zwei hydraulische Schnittstellen - beispielsweise je ein Zulauf und ein Ablauf oder je zwei gleichartige hydraulische Schnittstellen, wenn die Elektrolysezellenstapel etwa bezogen auf das Verbindungselement nur in einer Richtung durchströmt werden - mit dem Verbindungselement hydraulisch verbunden werden kann. So kann eine besonders kompakte Elektrolyseanlage realisiert werden.

Das erfindungsgemäße Verbindungselement kann in allen Ausführungsformen als hydraulische Schnittstellen jeweils nur die hier genannten oder beschriebenen hydraulischen Schnittstellen aufweisen. Ebenso kann das erfindungsgemäße Verbindungselement jedoch jeweils weitere hydraulische Schnittstellen aufweisen, beispielsweise wenn es als Knotenpunkt eines, insbesondere komplexeren, hydraulischen Systems dient. So kann beispielsweise eine Durchleitung von Wasser zu einem weiteren Verbindungselement oder einem weiteren Elektrolysezellenstapel an oder in dem erfindungsgemäßen Verbindungselement angeordnet oder realisiert sein.

In einer vorteilhaften Weiterbildung der vorliegenden Erfindung sind die Zuläufe, die Abläufe - also die hydraulischen Schnittstellen - und die Rohrleitungen drucktragend, also als drucktragende Bauteile, ausgebildet. Insbesondere sind sie dazu ausgebildet, einem Innendruck von wenigstens 35 bar standzuhalten. Dazu können also beispielsweise entsprechend stabile Verbindungen vorgesehen sein. Insbesondere sofern die Rohrleitungen nicht als Hohlräume oder Ausnehmungen in dem, beispielsweise ansonsten massiven, starren Grundkörper ausgebildet sind, können sie beispielsweise als Wellrohre oder Gewebeschläuche ausgebildet sein.

Durch das hydraulische Verbinden der Elektrolysezellenstapel mittels des Verbindungselements und in besonderem Maße durch die drucktragende oder druckstabile Ausführung der hydraulischen Schnittstellen und Rohrleitungen eignet sich das Verbindungselement vorteilhaft für einen Einsatz in oder als Teil einer Druckelektrolysevorrichtung. Bei der Druckelektrolyse wird das Wasser mittels einer Pumpe unter Druck durch die Wasserkreisläufe gepumpt, es findet also eine Zwangsumwälzung statt. Dadurch können mehr Elektrolysezellen hydraulisch in Reihe geschaltet betrieben werden als bei der selbstfördernden Elektrolyse.

In vorteilhafter Ausgestaltung der vorliegenden Erfindung sind die mechanischen Verbindungsschnittstellen als Flansche einem, einigen oder allen der hydraulischen Schnittstellen, also der Zuläufe und/oder der Abläufe, zum Herstellen einer mechanischen Verbindung eines externen Bauteils - beispielsweise eines Elektrolysezellenstapels oder eines weiteren Verbindungselements - mit dem Verbindungselement ausgebildet. Mit anderen Worten sind die entsprechend ausgebildeten Schnittstellen also kombinierte mechanisch-hydraulische Schnittstellen. Beispielsweise kann jeweils der Flansch ein Endstück der jeweiligen, an der hydraulischen Schnittstelle endenden oder beginnenden Rohrleitung umgeben oder bilden. Somit kann mit besonders geringem Aufwand sowohl die mechanische als auch die hydraulische Verbindung des jeweiligen Elektrolysezellenstapels mit dem Verbindungselement realisiert werden. Dadurch, dass die jeweilige mechanische Verbindung dabei unmittelbar an der hydraulischen Schnittstelle angeordnet ist, also stattfindet, kann vorteilhaft zudem ohne zusätzlichen Aufwand eine besonders hohe Dichtigkeit und/oder Druckstabilität der jeweiligen hydraulischen Verbindung erreicht werden.

In vorteilhafter Ausgestaltung der vorliegenden Erfindung ist in oder an einem, mehreren oder allen der Zu- und Abläufe und/oder sich daran anschließenden Rohrleitungen des Verbindungselements wenigstens ein einstellbares Bauteil, insbesondere eine Blende und/oder eine Drossel und/oder ein Ventil, zum Einstellen eines jeweiligen Wasserstroms - also einer Strömung und/oder eines Massen- oder Volumenstroms durchfließenden Wassers - angeordnet. Durch das einstellbare Bauteil oder die einstellbaren Bauteile kann vorteilhaft der jeweilige durch die hydraulische Schnittstelle oder Rohrleitung fließende Wasserstrom bedarfsgerecht eingestellt werden. Ebenso kann hierüber vorteilhaft eine Druckregulierung in dem hydraulischen System realisiert werden. Die Verwendung oder Anordnung mehrerer derartiger einstellbarer Bauteile kann es zudem vorteilhaft ermöglichen, einzelne Teile oder Abschnitte des hydraulischen Systems separat trockenzulegen, was beispielsweise Wartungs- oder Reparaturarbeiten erleichtern kann. Ebenso kann durch eine entsprechende Einstellung, Steuerung oder Regelung der einstellbaren Bauteile besonders vorteilhaft ein gleichzeitiger Betrieb von unterschiedlichen Elektrolysezellenstapeln an dem Verbindungselement ermöglicht werden. Dies kann beispielsweise dann nützlich sein, wenn die unterschiedlichen Elektrolysezellenstapel unterschiedliche Anforderungen an einen jeweiligen Wasserfluss oder Durchfluss stellen und/oder beispielsweise unterschiedliche Gasproduktionskapazitäten aufweisen.

In vorteilhafter Ausgestaltung der vorliegenden Erfindung weist das Verbindungselement zusätzlich einen mit einem, insbesondere mit nur einem, der Wasserkreisläufe durch eine Rohrleitung verbundenen öffenbaren und schließbaren Zwischenablauf und Zwischenzulauf auf. Hierüber ist das Verbindungselement durchströmendes Wasser - nach Bedarf - abzweigbar beziehungsweise zuführbar. Insbesondere kann hierüber ein einstellbarer Teil oder Anteil des das Verbindungselements durchströmenden Wassers abzweigbar beziehungsweise zuführbar sein, also abgezweigt und/oder zugeführt werden, wobei dieser Anteil mittels wenigstens eines in oder an dem Zwischenablauf und/oder dem Zwischenzulauf angeordneten, einstellbaren Ventils einstellbar ist. Mit anderen Worten kann also an dem Verbindungselement ein einstellbarer Teil eines das Verbindungselement beziehungsweise den jeweiligen Wasserkreislauf durchströmenden Wassersstroms, also des entsprechenden Massen- oder Volumenstroms, beispielsweise einem externen hydraulischen System oder einer externen Einrichtung zugeführt oder durch eine externe Einrichtung hindurchgeleitet werden, insbesondere nachdem dieser Teil oder Anteil des Wassers einen der angeschlossenen Elektrolysezellenstapel durchflossen hat aber bevor er in den anderen angeschlossenen Elektrolysezellenstapel fließt oder gelangt. Dies ermöglicht vorteilhaft eine, beispielsweise thermische und/oder chemische, Konditionierung oder Anpassung des Wassers - oder allgemein des verwendeten Elektrolysefluids, insbesondere zwischen dem Durchfließen der beiden Elektrolysezellenstapel. Dies ermöglicht wiederum einen verbesserten oder optimierten Elektrolysebetrieb beider angeschlossenen Elektrolysezellenstapel, da beispielsweise jeweils optimal konditioniertes Wasser zugeführt werden kann.

Beispielsweise kann so besonders effizient eine Überhitzung der Elektrolysezellenstapel oder der Elektrolysezellen vermieden werden, da das aufgeheizte Wasser über den Zwischenablauf effizient Prozesswärme aus dem Elektrolysezellenstapel abtransportieren kann. Ebenso kann über den Zwischenzulauf beispielsweise aufgeheiztes Wasser zugeführt werden, um einen effizienten Elektrolysebetrieb sicherzustellen. Beispielsweise kann so sichergestellt werden, dass das dem Zwischenzulauf hydraulisch nachgeschalteten Elektrolysezellenstapel zufließende Wasser wenigstens eine vorgegebene Mindesttemperatur, beispielsweise wenigstens 40°C, aufweist, da unterhalb dieser Temperatur die Elektrolyse deutlich weniger effizient ablaufen kann. So kann vorteilhaft ebenso ein schnelleres Starten des Elektrolysevorgangs oder der Elektrolysevorrichtung und/oder ein schnelleres Erreichen einer maximalen Effizienz aus einem vorherigen abgeschalteten Betriebszustand heraus ermöglicht werden.

Vorteilhaft kann eine Steuerung oder eine Regeleinrichtung an oder in dem Verbindungselement angeordnet, insbesondere Teil des Verbindungselements sein. Mittels dieser Steuerung oder Regeleinrichtung kann beispielsweise das einstellbare Ventil und/oder wenigstens ein anderes einstellbares Bauteil automatisch angesteuert, also ver- oder eingestellt werden. Diese automatische Ansteuerung kann beispielsweise in Abhängigkeit von einer gemessenen Temperatur des das Verbindungselement durchströmenden Wassers, in Abhängigkeit von einem in dem hydraulischen System vorliegenden Innen- oder Wasserdruck und/oder in Abhängigkeit von einer gemessenen Gasproduktion der angeschlossenen Elektrolysezellenstapel erfolgen. Hierfür können entsprechende Sensoren vorgesehen sein, welche beispielsweise Teil des Verbindungselements oder Teil einer entsprechenden Elektrolysevorrichtung sein können.

In vorteilhafter Ausgestaltung der vorliegenden Erfindung weist das Verbindungselement eine Heiz- und Kühleinrichtung zum Temperieren von das Verbindungselement durchströmendem Wasser auf. Die Heiz- und Kühleinrichtung kann insbesondere ein elektrisches Heizelement und/oder einen, bevorzugt aktiv belüfteten, Radiator umfassen. Eine solche Heiz- und Kühleinrichtung kann vorteilhaft eine besonders schnelle, da unmittelbar an oder in dem Verbindungselement selbst erfolgende Temperierung des Wassers ermöglichen. Die Heiz- und Kühleinrichtung kann alternativ oder zusätzlich zu einer Temperierung oder Konditionierung von über den Zwischenablauf abgezweigtem und/oder über den Zwischenzulauf zugeführtem Wasser eingerichtet sein, also betrieben werden.

In vorteilhafter Ausgestaltung der vorliegenden Erfindung weist das Verbindungselement ein elektrisches Schaltelement zum reversiblen Unterbrechen der elektrischen Verbindung der elektrischen Anschlüsse miteinander auf. Mit anderen Worten ist also ein elektrisches Schaltelement vorgesehen, mittels welchem bei an das Verbindungselement angeschlossenen Elektrolysezellenstapeln die elektrische Verbindung der Elektrolysezellenstapel unterbrochen werden kann. Hierdurch kann vorteilhaft auch dann, wenn beide Elektrolysezellenstapel an das Verbindungselement angeschlossen sind, bedarfsgerecht beispielsweise lediglich einer der beiden Elektrolysezellenstapel elektrisch betrieben, also tatsächlich zur Elektrolyse verwendet werden. Dies kann unabhängig von dem hydraulischen System, also unabhängig von einem Wasserfluss oder Wasserstrom sein. Durch das bedarfsgerechte Öffnen und Schließen des elektrischen Schaltelements kann vorteilhaft ein besonders effizienter Betrieb der Elektrolysevorrichtung erreicht werden, da beispielsweise eine optimale Spannungsanpassung mit minimalem Aufwand vorgenommen werden kann. So kann beispielsweise ein Betrieb eines einzigen Elektrolysezellenstapels unter Volllast effizienter sein als ein jeweils teillastiger, gleichzeitiger Betrieb beider Elektrolysezellenstapel. Durch die somit ermöglichte Vermeidung eines Teillastbetriebs kann vorteilhaft eine Alterung der Elektrolysezellenstapel verlangsamt werden.

In vorteilhafter Ausgestaltung der vorliegenden Erfindung weist das Verbindungselement eine, insbesondere einstellbare oder regelbare, Spannungsquelle und/oder Spannungssenke auf, welche elektrisch mit den elektrischen Anschlüssen verbunden ist oder mittels eines jeweiligen vorgeschalteten elektrischen Schalters verbindbar ist beziehungsweise sind. Die Spannungsquelle und/oder - beispielsweise je nach Polarität - Spannungssenke kann vorteilhaft eine besonders genaue Anpassung einer Spannungslage an eine externe elektrische Versorgung ermöglichen, um beispielsweise eine Effizienz der Elektrolysevorrichtung zu verbessern.

Die erfindungsgemäße Elektrolysevorrichtung weist ein erfindungsgemäßes Verbindungselement sowie zwei mit diesem elektrisch und mechanisch verbundene Elektrolysezellenstapel auf. Darüber hinaus kann die erfindungsgemäße Elektrolysevorrichtung weitere Bauteile oder Einrichtungen aufweisen, beispielsweise ein Wasserreservoir, eine Einrichtung zum Temperieren und/oder Konditionierung des für die Elektrolyse verwendeten Wassers, eine Pumpe zum Pumpen des Wassers durch die Elektrolysevorrichtung, also zum Antreiben des Wasserstroms oder einer Wasserzirkulation, eine Gassammeleinrichtung zum Auffangen des von den Elektrolysezellenstapeln produzierten Gases und/oder dergleichen mehr.

In einer Weiterbildung der erfindungsgemäßen Elektrolysevorrichtung weist diese zwei weitere erfindungsgemäße Verbindungselemente auf, welche an von dem die Elektrolysezellenstapel verbindenden, zentralen Verbindungselement abgewandten Enden der Elektrolysezellenstapel angeordnet sind. Aufgrund dieser entfernten oder außenseitigen Anordnung oder Position werden die zwei weiteren Verbindungselemente hier als distale Verbindungselemente bezeichnet.

Die distalen Verbindungselemente können identisch zu dem zentralen Verbindungselement ausgestaltet sein. Dies kann beispielsweise eine Reihenschaltung weiterer Elektrolysezellenstapel oder Elektrolysevorrichtung in mit der erfindungsgemäßen Elektrolysevorrichtung ermöglichen.

Ebenso können die distalen Verbindungselemente jedoch von dem zentralen Verbindungselement unterschiedlich ausgebildet sein. Beispielsweise kann das zentrale Verbindungselement vollständig von Rohrleitungen durchgegriffen sein, um die Elektrolysezellenstapel hydraulisch miteinander zu verbinden. Demgegenüber können die distalen Verbindungselemente beispielsweise als Endelemente oder Endkappen ausgebildet sein und die Wasserkreisläufe der Elektrolysezellenstapel nach außen hin, das heißt also in eine entlang der Stapelrichtung von dem zentralen Verbindungselement abgewandte Richtung, ver- oder abschließen, also begrenzen. Die distalen Verbindungselemente können dann beispielsweise einen von dem zentralen Verbindungselement ausgehenden und den jeweiligen Elektrolysezellenstapel bis zu dem jeweiligen distalen Verbindungselement durchströmenden Wasserstrom oder Wasserfluss umlenken, sodass dieser den jeweiligen Elektrolysezellenstapel in umgekehrter Richtung erneut bis hin zu dem zentralen Verbindungselement durchströmt oder durchfließt. Dies kann vorteilhaft eine besonders einfache und zentrale hydraulische Kontaktierung der Elektrolysevorrichtung an dem zentralen Verbindungselement ermöglichen.

Unabhängig von deren sonstiger Ausgestaltung können das erfindungsgemäße Verbindungselement und die erfindungsgemäße Elektrolysevorrichtung für die PEM-Elektrolyse (englisch "proton exchange membrane" oder "polymer elektrolyte membrane") verwendet werden, also ausgebildet sein.

Die bisher und im Folgenden angegebenen Eigenschaften und Weiterbildungen des erfindungsgemäßen Verbindungselements sowie die entsprechenden Vorteile sind jeweils sinngemäß auf die erfindungsgemäße Elektrolysevorrichtung übertragbar und umgekehrt. Es gehören also zu der Erfindung auch solche Weiterbildungen des erfindungsgemäßen Verbindungselements und der erfindungsgemäßen Elektrolysevorrichtung, welche Ausgestaltungen aufweisen, die hier nicht explizit in der jeweiligen Kombination beschrieben sind.

Weitere Merkmale, Einzelheiten und Vorteile der vorliegenden Erfindung ergeben sich aus der nachfolgenden Beschreibung bevorzugter Ausführungsbeispiele sowie anhand der Zeichnungen. Dabei zeigen:
- FIG 1: eine schematische Seitenansicht zweier Elektrolysezellenstapel, die durch ein Verbindungselement elektrisch und mechanisch miteinander verbunden und hydraulisch voneinander getrennt sind; und
- FIG 2: eine schematische und ausschnittweise Seitenansicht einer alternativen Variante eines Verbindungselements, welches zwei Elektrolysezellenstapel elektrisch, mechanisch und hydraulisch miteinander verbindet.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den FIG sind gleiche, funktionsgleiche oder einander entsprechende Elemente jeweils mit den gleichen Bezugszeichen gekennzeichnet.

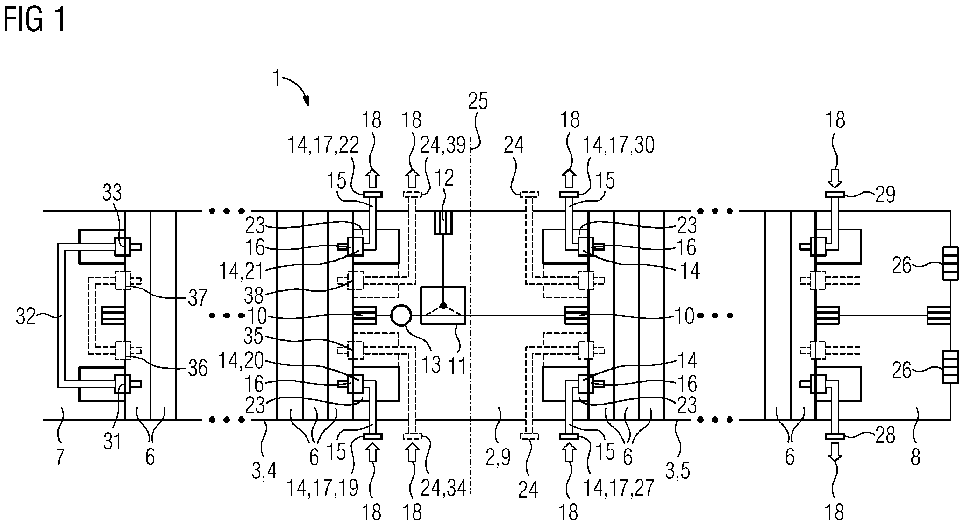

FIG 1 zeigt eine schematische und ausschnittsweise Seitenansicht einer Elektrolysevorrichtung 1, welche ein zentral angeordnetes Verbindungselement 2 sowie zwei mit diesem verbundene Elektrolysezellenstapel 3 aufweist. Letztere sind ein erster Elektrolysezellenstapel 4 und ein zweiter Elektrolysezellenstapel 5, welche an einander gegenüberliegenden Seiten des Verbindungselements 2 an dieses angeschlossen sind. Die Elektrolysezellenstapel 3 weisen jeweils eine Vielzahl einzelner Elektrolysezellen 6 auf, welche in oder entlang der jeweiligen Stapelrichtung oder Stapelachse der Elektrolysezellenstapel 3 zumindest im Wesentlichen parallel zueinander angeordnet sind. Es sind hier beispielhaft lediglich einige Elektrolysezellen 6 dargestellt, die Elektrolysezellenstapel 3 können jedoch eine Vielzahl weiterer Elektrolysezellen 6 aufweisen. Weiterhin schematisch beziehungsweise angedeutet dargestellt sind hier ein erstes distales Verbindungselement 7 und ein zweites distales Verbindungselement 8. Die distalen Verbindungselemente 7, 8 sind an gegenüberliegenden, von dem zentralen Verbindungselement 2 abgewandten Seiten der Elektrolysezellenstapel 3 angeordnet. Die distalen Verbindungselemente 7, 8 können jeweils zusätzliche, separate Bauteile sein oder sie können Teil der Elektrolysevorrichtung 1 sein.

Das Verbindungselement 2 weist einen starren Grundkörper 9 auf, in den weitere Komponenten des Verbindungselements 2 eingebettet sind. Der Grundkörper 9 kann je nach Anforderungen beispielsweise aus einem metallischen oder keramischen Werkstoff oder einem Kunststoff oder einer Kombination daraus gebildet sein. Vorliegend weist das Verbindungselement 2 zwei elektrische Schnittstellen oder elektrische Anschlüsse 10 zum elektrischen Anschließen oder Kontaktieren der zwei Elektrolysezellenstapel 3 auf. Die elektrischen Anschlüsse 10 sind vorliegend an denjenigen Seiten des Verbindungselements 2 angeordnet, mit denen auch die Elektrolysezellenstapel 3 verbunden sind. Dies stellt eine bevorzugte, nicht jedoch die einzige Anordnungsmöglichkeit dar. Insbesondere bei einer Anordnung der elektrischen Anschlüsse 10 an einer anderen Seite des Verbindungselements 2 kann die jeweilige elektrische Verbindung mit den Elektrolysezellenstapeln 3 beispielsweise mittels einer entsprechend geführten elektrischen Leitung hergestellt werden. Die elektrischen Anschlüsse 10 sind mittels einer das Verbindungselement 2 durchgreifenden elektrischen Leitung miteinander verbunden, sodass hierüber auch die beiden Elektrolysezellenstapel 3 elektrisch miteinander verbunden, insbesondere in Reihe geschaltet, sind.

Vorliegend weist das Verbindungselement 2 an dieser elektrischen Leitung ein elektrisches Schaltelement 11 auf, mittels welchem die elektrische Verbindung der beiden elektrischen Anschlüsse 10 und damit der beiden Elektrolysezellenstapel 3 bei Bedarf reversibel unterbrochen beziehungsweise hergestellt werden kann. Dabei kann beispielsweise eine elektrische Verbindung eines der beiden Elektrolysezellenstapel 3 mit einem elektrischen Alternativanschluss 12 des Verbindungselements 2 hergestellt werden. Dies kann vorteilhaft einen individuellen Betrieb der angeschlossenen Elektrolysezellenstapel 3 ermöglichen. Der elektrische Alternativanschluss 12 kann beispielsweise mit einer externen elektrischen Energieversorgung verbunden sein oder werden.

Im vorliegenden Beispiel weist das Verbindungselement 2 zusätzlich eine mit der elektrischen Leitung verbundene, einstellbare oder regelbare elektrische Spannungsquelle 13 auf, mittels welcher eine Spannungslage beeinflussbar ist. Hierüber kann beispielsweise eine Spannungs- und/oder Leistungsanpassung bezogen auf die externe elektrische Energieversorgung, mittels welcher die Elektrolysezellenstapel 3 betrieben werden, realisiert werden.

Neben dem elektrischen Verbinden der beiden Elektrolysezellenstapel 3 dient das Verbindungselement 2 zum mechanischen und hydraulischen Anbinden oder Kontaktieren der beiden Elektrolysezellenstapel 3. In der vorliegend gezeigten Ausführungsform sind die Elektrolysezellenstapel 3 und das Verbindungselement 2 mechanisch zum Bilden der Elektrolysevorrichtung 1 aneinandergekoppelt. Hydraulisch sind sowohl der erste. Elektrolysezellenstapel 4 als auch der zweite Elektrolysezellenstapel 5 hier zwar jeweils mit dem Verbindungselement 2, also mit einem hydraulischen System des Verbindungselements 2, verbunden, jedoch nicht miteinander. Mit anderen Worten separiert das Verbindungselement 2 die beiden Elektrolysezellenstapel 3 hydraulisch voneinander, bildet also ein hydraulisches Trennelement zwischen den beiden Elektrolysezellenstapeln 3.

Das hydraulische System des Verbindungselements 2 umfasst hydraulische Schnittstellen 14, von denen das Verbindungselement 2 hier mehrere aufweist. Weiter umfasst das hydraulische System des Verbindungselements 2 Rohrleitungen 15, die jeweils zwei der hydraulischen Schnittstellen 14 miteinander verbinden. Im vorliegenden Verbund, das heißt bei an das Verbindungselement 2 angeschlossenen Elektrolysezellenstapeln 3, werden die jeweiligen hydraulischen Verbindungen des Verbindungselements 2 mit dem ersten Elektrolysezellenstapel 4 einerseits und mit dem zweiten Elektrolysezellenstapel 5 andererseits mittels entsprechender jeweiliger Hydraulikanschlüsse 16 der Elektrolysezellenstapel 3 hergestellt. Dazu werden die Hydraulikanschlüsse 16 mit den entsprechenden, an der jeweiligen Seite des Verbindungselements 2 angeordneten hydraulischen Schnittstellen 14 des Verbindungselements 2 verbunden. Dabei können einige oder alle der hydraulischen Schnittstellen 14 und der Hydraulikanschlüsse 16 Flansche aufweisen oder als Flansche ausgebildet sein, um gleichzeitig die mechanische Verbindung der Elektrolysezellenstapel 3 mit dem Verbindungselement 2 einfach und platzsparend herzustellen oder zu ermöglichen.

Nicht zum hydraulischen Verbinden mit einem der Elektrolysezellenstapel 3, also mit einem der Hydraulikanschlüsse 16, vorgesehene hydraulische Schnittstellen 14 können beispielsweise Externanschlüsse 17 sein. Diese Externanschlüsse 17 können zum hydraulischen Anbinden des Verbindungselements 2, genauer von dessen hydraulischem System, mit einer externen Wasserleitung oder Wasserversorgung, also mit einem externen hydraulischen System dienen.

Je nach in einem konkreten Anwendungsfall gegebener Fließrichtung von das hydraulische System des Verbindungselements 2 und entsprechend die Elektrolysezellenstapel 3 durchfließendem Wasser kann es sich bei den einzelnen hydraulischen Schnittstellen 14 und den einzelnen Hydraulikanschlüssen 16 jeweils um einen Zulauf oder um einen Ablauf handeln. Beispielhaft ist hier durch Pfeile 18 eine mögliche Fließrichtung angedeutet. Dementsprechend umfasst die Menge der hydraulischen Schnittstellen 14 für den ersten Elektrolysezellenstapel 4 einen ersten Zulauf 19, einen ersten Ablauf 20, einen zweiten Zulauf 21 und einen zweiten Ablauf 22. Der erste Zulauf 19 und der erste Ablauf 20 können dabei Teil eines ersten. Wasserkreislaufs sein, während der zweite Zulauf 21 und der zweite Ablauf 22 Teil eines davon separaten oder unabhängigen zweiten Wasserkreislaufs sein können. Entsprechendes gilt für den zweiten Elektrolysezellenstapel 5. Die beiden Elektrolysezellenstapel 3 können dementsprechend also von jeweils zwei unabhängigen Wasserkreisläufen durchströmt werden, von denen einer beispielsweise zur Gewinnung von Wasserstoffgas und der andere zur Gewinnung von Sauerstoff verwendet werden kann.

Die für die hydraulische Verbindung des Verbindungselements 2 mit den Elektrolysezellenstapeln 3 vorgesehenen der hydraulischen Schnittstellen 14 können beispielsweise jeweils in einer Tasche oder Ausnehmung 23 angeordnet sein. Hierdurch kann Raum bereitgestellt werden, um eine bündige Verbindung zwischen dem Verbindungselement 2 und den Elektrolysezellenstapeln 3 zu erreichen und/oder um beispielsweise Platz für eine Bewegung einer beweglichen Aufhängung und/oder eines flexiblen Abschnitts der jeweiligen Rohrleitung 15 bereitzustellen und/oder um eine Montage der Elektrolysevorrichtung 1 zu erleichtern.

Je nach konkreter Ausgestaltung oder konkreten Anforderungen kann das hydraulische System des Verbindungselements 2 weitere Komponenten aufweisen. Beispielhaft hierfür ist vorliegend ein weiterer Satz 24 von hydraulischen Schnittstellen und entsprechenden Rohrleitungen, also hydraulischen Verbindungen, angedeutet. Derartige weitere hydraulische Komponenten einen beispielsweise komplexe Wasserführungen, wie beispielsweise eine Hin- und Rückführung durch den jeweiligen Elektrolysezellenstapel 3 in getrennten Wasserkreisläufen ermöglichen. Dazu können die weiteren hydraulischen Komponenten 24 beispielsweise weitere Zuläufe, Abläufe, Externanschlüsse und dergleichen umfassen oder sein.

In der hier dargestellten Ausführungsform weist das Verbindungselement 2 insgesamt wenigstens acht hydraulische Schnittstellen 14 auf. Ebenso kann aber beispielsweise entlang einer hier angedeuteten zentralen Querebene 25 eine Trennlinie verlaufen, an welcher zwei Verbindungselemente miteinander verbunden sind, von denen jedes dann beispielsweise nur vier hydraulische Schnittstellen 14 - gegebenenfalls ergänzt um die jeweiligen weiteren hydraulischen Komponenten 24 - aufweist. Eine derartige Bauform eines Verbindungselements ist hier in Form des zweiten distalen Verbindungselements 8 angedeutet. Wie das Verbindungselement 2 weist auch das zweite distalen Verbindungselement 8 elektrische und hydraulische Schnittstellen auf und kann zudem ebenfalls hier nicht dargestellte optionale Komponenten, entsprechend beispielsweise dem Schaltelement 11, dem Alternativanschluss 12, der Spannungsquelle 13 und/oder den weiteren hydraulischen Komponenten 24, aufweisen. Anders als das Verbindungselement 2 weist das zweite distale Verbindungselement 8 an seiner dem zweiten Elektrolysezellenstapel 5 abgewandten Seite hier beispielhaft angedeutete mechanische Schnittstellen 26 auf, die zum mechanischen Verbinden des zweiten distalen Verbindungselements 8 mit einem weiteren, hier nicht dargestellten Verbindungselement vorgesehen und ausgebildet sind.

Die mechanischen Schnittstellen 26 können dabei beispielsweise mit einer elektrischen Schnittstelle kombiniert werden, um eine elektrische Verbindung zwischen dem zweiten distalen Verbindungselement 8 und dem hier nicht dargestellten weiteren Verbindungselement zu ermöglichen. Bei der hier dargestellten Anordnung kann beispielsweise das für die Elektrolyse in dem zweiten Elektrolysezellenstapel verwendete Wasser in einem ersten Wasserstrom von einer externen Quelle oder Wasserversorgung über eine hydraulische Schnittstelle 27 in das Verbindungselement 2 und von dort über die sich daran anschließende Rohrleitung 15 in den zweiten Elektrolysezellenstapel 5 gelangen. Diesen kann das Wasser dann in einem ersten Wasserkreislauf bis zu dem zweiten distalen Verbindungselement 8 durchlaufen, aus dem es über eine hydraulische Schnittstelle 28 herausgeführt werden kann. In einem zweiten, davon unabhängigen Wasserkreislauf des zweiten Elektrolysezellenstapels 5 kann beispielsweise ein entsprechender zweiter Wasserstrom über eine hydraulische Schnittstelle 29 von einer externen Quelle oder Versorgung in das zweite distale Verbindungselement 8 und weiter in den zweiten Elektrolysezellenstapel 5 gelangen. Dieser wird dann in dem zweiten Wasserkreislauf bis zu dem Verbindungselement 2 durchströmt, welches der zweite Wasserstrom beispielsweise über eine hydraulische Schnittstelle 30 wieder verlassen kann. Bei dieser Anordnung kann das zweite distale Verbindungselement 8 also als Endelement oder Endkappe des zweiten Elektrolysezellenstapels 5 ausgebildet sein.

In dem ersten distalen Verbindungselement 7 ist beispielhaft eine alternative Konfiguration des hydraulischen Systems angedeutet. In dieser möglichen Konfiguration kann beispielsweise ein erster Wasserstrom für den ersten Elektrolysezellenstapel 4 von einer externen Wasserversorgung in den ersten Zulauf 19 und weiter über den ersten Ablauf 20 in den ersten Elektrolysezellenstapel 4 fließen. Diesen kann dieser erste Wasserstrom dann bis zu einer hydraulischen Schnittstelle 31 durchfließen, an der der erste Elektrolysezellenstapel 4 hydraulisch mit dem ersten distalen Verbindungselement 7 verbunden ist. Dieser erste Wasserstrom kann dann eine sich an die hydraulische Schnittstelle 31 anschließende Umlenk-Rohrleitung 32 durch das erste distale Verbindungselement 7 bis zu einer weiteren hydraulischen Schnittstelle 33 fließen, an welcher er erneut in den ersten Elektrolysezellenstapel eintreten kann, um diesem in umgekehrter Richtung zurück zu dem Verbindungselement 2 zu durchfließen. Hierbei tritt der erste Wasserstrom jedoch über den zweiten Zulauf 21 in das Verbindungselement 2 ein, um dieses dann über den zweiten. Ablauf 22 zu verlassen. Analog und parallel kann beispielsweise ein zweiter Wasserstrom in einem unabhängigen zweiten Wasserkreislauf von einer externen Quelle durch eine hier angedeutet dargestellte hydraulische Schnittstelle 34 in das Verbindungselement 2 gelangen und dieses bis zu einer weiteren angedeuteten hydraulischen Schnittstelle 35 durchfließen, wo der zweite Wasserstrom dann in den ersten Elektrolysezellenstapel 4 übertreten kann. Unabhängig von dem ersten Wasserstrom kann dieser zweite Wasserstrom den Elektrolysezellenstapel 4 dann von der weiteren hydraulischen Schnittstelle 35 bis zu einer hydraulischen Schnittstelle 36 durchlaufen, wo er in das hydraulische System des ersten distalen Verbindungselements 7 eintreten kann. Letzteres kann dieser zweite Wasserstrom, nachdem er über eine entsprechende verbindende Rohrleitung das erste distale Verbindungselement 7 durchflossen hat, an einer hydraulischen Schnittstelle 37 durch erneutes Übertreten in den ersten Elektrolysezellenstapel 4 wieder verlassen. Weiterhin dem unabhängigen zweiten Wasserkreislauf des ersten Elektrolysezellenstapels 4 folgend kann dieser zweite Wasserstrom den ersten Elektrolysezellenstapel 4 bis zu einer weiteren angedeuteten hydraulischen Schnittstelle 38 durch erneutes Übertreten in das Verbindungselement 2 verlassen. Aus dem Verbindungselement 2 kann der zweite Wasserstrom dann beispielsweise über eine hier ebenfalls angedeutet dargestellte weitere hydraulische Schnittstelle 39 austreten.

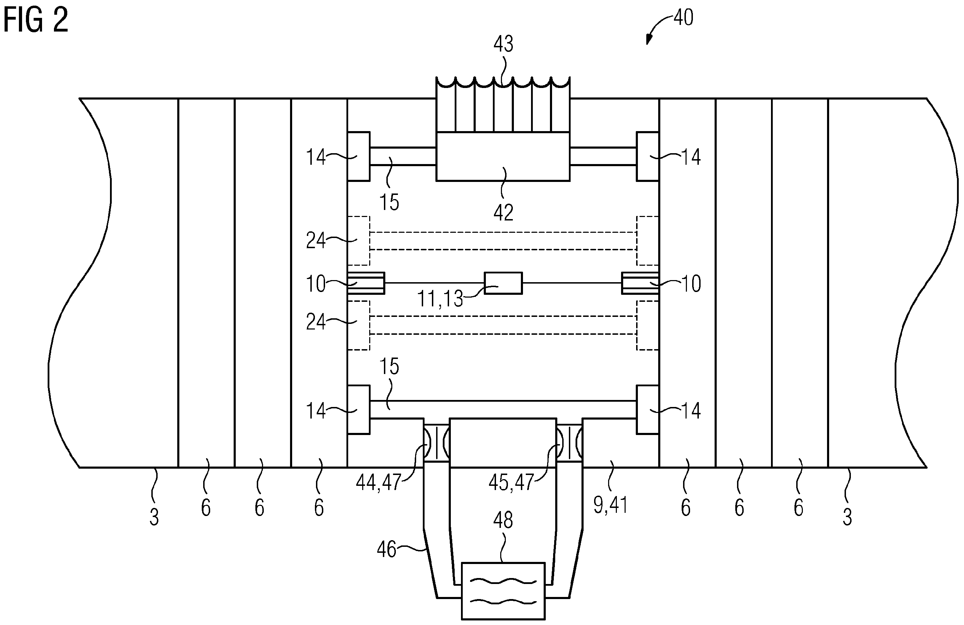

FIG 2 zeigt eine schematische und ausschnittsweise Seitenansicht einer zweiten Elektrolysevorrichtung 40, bei der ein Verbindungselement 41 in einer alternativen Ausführungsform ebenfalls zwei Elektrolysezellenstapel 3 miteinander verbindet. Das Verbindungselement 41 kann dabei in elektrischer und mechanischer Hinsicht ebenso oder ähnlich wie das Verbindungselement 2 ausgebildet sein. Das Verbindungselement 41 weist also ebenfalls elektrisch miteinander verbundene elektrische Anschlüsse 10 zum elektrischen Verbinden der beiden an das Verbindungselement 41 angeschlossenen Elektrolysezellenstapel 3 auf. Ebenso kann das Verbindungselement 41 beispielsweise dem Schaltelement 11, dem Alternativanschluss 12 und/oder der Spannungsquelle 13 entsprechende Bauteile oder Komponenten aufweisen - auch wenn diese hier nicht sämtlich explizit dargestellt sind.

Auch weist das Verbindungselement 41 mehrere hydraulische Schnittstellen 14 auf, welche paarweise mit Rohrleitungen 15 hydraulisch miteinander verbunden sind. Darüber hinaus kann das Verbindungselement 41 ebenfalls weitere hydraulische Komponenten 24, wie beispielsweise weitere Zuläufe, Abläufe und Rohrleitungen oder dergleichen, aufweisen.

Das Verbindungselement 41 dient also ebenso wie das Verbindungselement 2 zum elektrischen und mechanischen koppeln zweier Elektrolysezellenstapel 3. Anders als das Verbindungselement 2 stellt das Verbindungselement 41 jedoch keine hydraulische Trennung zwischen den angeschlossenen Elektrolysezellenstapeln 3 dar, sondern verbindet diese auch hydraulisch miteinander. Dabei kann ein erster Wasserkreislauf eines der Elektrolysezellenstapel 3 mit einem ersten Wasserkreislauf des anderen der Elektrolysezellenstapel 3 über eine Rohrleitung 15 des Verbindungselements 41 und entsprechende hydraulische Schnittstellen 14 hydraulisch verbunden sein. Entsprechendes kann für jeweilige zweite Wasserkreisläufe der beiden Elektrolysezellenstapel 3 gelten.

Am Beispiel der zweiten Elektrolysevorrichtung 40 sollen nun einige weitere mögliche Komponenten oder Ausgestaltungen erläutert werden, die analog auf das Verbindungselement 2 sowie die distalen Verbindungselemente 7, 8 angewendet, also auf diese übertragen werden können.

Vorliegend weist das Verbindungselement 41 eine Heiz- und Kühleinrichtung 42 auf. Die Heiz- und Kühleinrichtung 42 dient zum gesteuerten oder geregelten, insbesondere aktiven, Temperieren des das Verbindungselement 41 durchströmenden Wassers. Dazu kann die Heiz- und Kühleinrichtung 42 bevorzugt an einer Rohrleitung 15, welche von dem zu temperierenden Wasser durchströmt wird oder durchströmbar ist, angeordnet sein, beispielsweise die entsprechende Rohrleitung 15 umgeben. Die Heiz- und Kühleinrichtung 42 kann zum Aufheizen des Wassers beispielsweise eine elektrische Heizung und zum Abkühlen des Wassers einen Kühlkörper oder Radiator 43 aufweisen. Um eine effiziente Abkühlung zu ermöglichen, kann der Radiator 43 beispielsweise wärmeleitend mit dem Grundkörper 9 des Verbindungselements 41 gekoppelt sein und/oder das Verbindungselement 41 bis zu dessen Außenseite durchgreifen, sodass der Radiator 43 dann aus dem Wasser aufgenommene Wärme direkt an eine Umgebung des Verbindungselements 41 abgeben, beispielsweise abstrahlen, kann. Das Verbindungselement 41 kann anders als hier dargestellt ebenso mehrere entsprechende Heiz- und Kühleinrichtung 42 aufweisen, beispielsweise kann an jeder Rohrleitung 15 eine eigene Heiz- und Kühleinrichtung 42 angeordnet sein, wodurch vorteilhaft eine besonders genaue, individuell angepasste Temperierung für unterschiedliche Abschnitte des hydraulischen Systems der Elektrolysevorrichtung 40 ermöglicht wird.

Des Weiteren weist das Verbindungselement 41 vorliegend an einer der Rohrleitungen 15 einen Zwischenablauf 44 und einen Zwischenzulauf 45 auf, welche die entsprechende Rohrleitung 15, also das hydraulische System des Verbindungselements 41, vorliegend mit einem externen hydraulischen System 46 hydraulisch verbinden. Über den Zwischenablauf 46 kann dabei Wasser aus der Rohrleitung 15 abgezweigt, also aus dem Verbindungselement 41 herausgeleitet werden, insbesondere direkt, also ohne zunächst einen der Elektrolysezellenstapel 3 zu durchfließen. Entsprechend kann aus dem externen hydraulischen System 46 über den Zwischenzulauf 45 ebenso direkt Wasser in die Rohrleitung 15 eingeleitet, also dem hydraulischen System des Verbindungselements 41 zugeführt werden.

Um einen Anteil des so abgezweigten und/oder zugeführten Wassers regulieren zu können, sind vorliegend in dem Zwischenablauf 44 und dem Zwischenzulauf 45 einstellbare Ventile 47 angeordnet.

Das externe hydraulische System 46 kann beispielsweise eine Konditionierungseinrichtung 48 zum Konditionierung des abgezweigten und/oder des zuzuführen Wassers aufweisen. Mittels der Konditionierungseinrichtung 48 kann beispielsweise das Wasser temperiert, chemisch aufbereitet und/oder gereinigt werden. Ebenso kann beispielsweise über den Zwischenablauf 44 und das entsprechende Ventil 47 Wasser für Mess- oder Kontrollzwecke aus dem hydraulischen System der zweiten Elektrolysevorrichtung 40 entnommen werden. Weiterhin können der Zwischenablauf 44 und/oder der Zwischenzulauf 45 zur Druckregulierung in dem hydraulischen System des Verbindungselements 41 oder der zweiten Elektrolysevorrichtung 40 insgesamt verwendet werden. Anders als hier dargestellt kann das Verbindungselement 41 mehr als einen Zwischenablauf 44 und/oder mehr als einen Zwischenzulauf 45 aufweisen, beispielsweise an einer, mehreren oder allen weiteren Rohrleitungen 15 und/oder hydraulischen Schnittstellen 14. Auch das Verbindungselement 2 sowie die distalen Verbindungselemente 7, 8 können derartige Zwischenabläufe 44 und/oder Zwischenzuläufe 45 und/oder entsprechende Ventile 47 aufweisen. Ebenso können alle Verbindungselemente 2, 7, 8, 41 an anderer Stelle oder an anderen Stellen des jeweiligen hydraulischen Systems Komponenten oder Bauteile, insbesondere einstellbare Bauteile, wie Blenden, Drosseln und/oder Ventile, zum Regulieren eines jeweiligen Wasserstroms, also eines jeweiligen Massen- oder Volumenstroms und/oder einer Strömung oder Strömungsgeschwindigkeit, aufweisen.

## Patentansprüche

1. Verbindungselement (2, 7, 8, 41) zum elektrischen und mechanischen Verbinden zweier Elektrolysezellenstapel (3, 4, 5), wobei das Verbindungselement (2, 7, 8, 41)
- einen starren Grundkörper (9) aufweist, der zum hydraulischen Anschließen wenigstens eines der Elektrolysezellenstapel (3, 4, 5) einen ersten Zulauf (14, 19, 31) und einen ersten Ablauf (14, 20, 33) für einen ersten Wasserkreislauf und für einen von diesem unabhängigen zweiten Wasserkreislauf einen zweiten Zulauf (14, 21, 36) und einen zweiten Ablauf (14, 22, 37) aufweist,
- elektrisch leitend miteinander verbundene elektrische Anschlüsse (10) zum elektrischen Anschließen der zwei Elektrolysezellenstapel (3, 4, 5) aufweist, wobei das Verbindungselement (2, 7, 8, 41) bei an die elektrischen Anschlüsse (10) angeschlossenen Elektrolysezellenstapeln (3, 4, 5) eine elektrische Verbindung der beiden Elektrolysezellenstapel (3, 4, 5) in einem gemeinsamen Stromkreis bildet, und
- mechanische Verbindungsschnittstellen zum mechanischen Verbinden der Elektrolysezellenstapel (3, 4, 5) mit dem Verbindungselement (2, 7, 8, 41) aufweist, wobei die mechanischen Verbindungsschnittstellen an einander gegenüberliegenden Seiten des Verbindungselementes (2, 7, 8, 41) angeordnet sind, sodass bei mit den Verbindungsschnittstellen mechanisch verbundenen Elektrolysezellenstapeln (3, 4, 5) sich deren Stapelachsen parallel zueinander erstrecken.

2. Verbindungselement (2, 7, 8, 41) nach Anspruch 1, **dadurch gekennzeichnet, dass** das Verbindungselement (2, 7, 8, 41) für jeden Wasserkreislauf wenigstens einen mit diesem durch eine Rohrleitung (15) verbundenen hydraulischen Externanschluss (17) zum Anschließen wenigstens einer externen, von den Elektrolysezellenstapeln (3, 4, 5) verschiedenen Wasserleitung aufweist.

3. Verbindungselement (7, 8) nach einem der vorhergehenden Ansprüche, **dadurch gekennzeichnet, dass**
- das Verbindungselement (7, 8) als Endelement für einen ersten der beiden Elektrolysezellenstapel (3, 4, 5) ausgebildet ist,
- die diesem Elektrolysezellenstapel (3, 4, 5) zugeordneten elektrischen Anschlüsse und mechanischen Verbindungsschnittstellen zum direkten Anschließen beziehungsweise Verbinden dieses Elektrolysezellenstapels (3, 4, 5) ausgebildet sind und
- die dem zweiten der beiden Elektrolysezellenstapel (3, 5, 4) zugeordneten elektrischen Anschlüsse und mechanischen Verbindungsschnittstellen zum Anschließen beziehungsweise Verbinden mit einem als Endelement des zweiten Elektrolysezellenstapels (3, 5, 4) dienenden baugleichen Verbindungselement (7, 8) ausgebildet sind.

4. Verbindungselement (7) nach Anspruch 3, **dadurch gekennzeichnet, dass** die Zuläufe (31, 36) und Abläufe (36, 37) des ersten und des zweiten Wasserkreislaufs dem ersten Elektrolysezellenstapel (3, 4) zugeordnet sind, sodass das Verbindungselement (7) bei mit diesem verbundenen Elektrolysezellenstapeln (3, 4) nur von Wasser des ersten Elektrolysezellenstapels (4) durchströmbar ist und dadurch eine hydraulische Trennung zwischen den Elektrolysezellenstapeln (3, 4) bildet.

5. Verbindungselement (2, 7, 8, 41) nach einem der Ansprüche 1 und 2, **dadurch gekennzeichnet, dass**
- das Verbindungselement (2, 7, 8, 41) zusätzlich einen dritten Zulauf (14, 24) und einen dritten Ablauf (14, 24) für einen dritten Wasserkreislauf und einen vierten Zulauf (14, 24) und einen vierten Ablauf (14, 24) für einen vierten Wasserkreislauf aufweist, wobei alle vier Wasserkreisläufe voneinander unabhängig sind, und
- die Zuläufe (14, 24) und Abläufe (14, 24) für den ersten Wasserkreislauf und für den zweiten Wasserkreislauf einem ersten der Elektrolysezellenstapel (3, 4, 5) und die Zuläufe (14, 24) und Abläufe (14, 24) für den dritten Wasserkreislauf und für den vierten Wasserkreislauf einem zweiten der Elektrolysezellenstapel (3, 5, 4) zugeordnet sind, sodass das Verbindungselement (2, 7, 8, 41) bei mit diesem verbundenen Elektrolysezellenstapeln (3, 4, 5) gleichzeitig von Wasser beider Elektrolysezellenstapel (3, 4, 5) durchströmbar ist und dabei eine hydraulische Trennung zwischen den Elektrolysezellenstapeln (3, 4, 5) bildet.

6. Verbindungselement (41) nach einem der Ansprüche 1 bis 3, **dadurch gekennzeichnet, dass** das Verbindungselement (41) für jeden der beiden Wasserkreisläufe Rohrleitungen (15) aufweist, die den jeweiligen Zulauf (14, 24) mit dem jeweiligen Ablauf (14, 24) verbinden und bei angeschlossenen Elektrolysezellenstapeln das Verbindungselement (41) durch die Zuläufe (14, 24), Abläufe (14, 24) und Rohrleitungen (15) eine hydraulische Verbindung der beiden Elektrolysezellenstapel (3, 4, 5) bildet.

7. Verbindungselement (41) ach Anspruch 6, **dadurch gekennzeichnet, dass** die Zuläufe (14, 24), Abläufe (14, 24) und Rohrleitungen (15) drucktragend ausgebildet sind, insbesondere dazu ausgebildet sind, einem Innendruck von wenigstens 35 bar standzuhalten.

8. Verbindungselement (2, 7, 8, 41) nach einem der vorhergehenden Ansprüche, **dadurch gekennzeichnet, dass** die mechanischen Verbindungsschnittstellen als Flansche an einem, einigen oder allen der Zuläufe (14, 24) und/oder Abläufe (14, 24) zum Herstellen einer mechanischen Verbindung eines externen Bauteils (2, 4, 5, 7, 8) mit dem Verbindungselement (2, 7, 8, 41) ausgebildet sind.

9. Verbindungselement (2, 7, 8, 41) nach einem der vorhergehenden Ansprüche, **dadurch gekennzeichnet, dass** in einem, mehreren oder allen der Zuläufe (14, 24) und Abläufe (14, 24) und/oder sich daran anschließenden Rohrleitungen (15, 32) des Verbindungselements (2, 7, 8, 41) wenigstens ein einstellbares Bauteil, insbesondere eine Blende und/oder eine Drossel und/oder ein Ventil, zum Einstellen eines jeweiligen Wasserstromes angeordnet ist.

10. Verbindungselement (2, 7, 8, 41) nach einem der vorhergehenden Ansprüche, **dadurch gekennzeichnet, dass** das Verbindungselement (2, 7, 8, 41) zusätzlich wenigstens jeweils einen, mit einem der Wasserkreisläufe durch eine Rohrleitung (15) verbundenen öffenbaren und schließbaren Zwischenablauf (44) und Zwischenzulauf (45) aufweist, worüber das Verbindungselement (2, 7, 8, 41) durchströmendes Wasser, insbesondere ein mittels wenigstens eines in oder an dem Zwischenablauf (44) und/oder dem Zwischenzulauf (45) angeordneten einstellbaren Ventils (47) einstellbarer Anteil des das Verbindungselement durchströmenden Wassers, nach Bedarf abzweigbar beziehungsweise zuführbar ist.

11. Verbindungselement (2, 7, 8, 41) nach einem der vorhergehenden Ansprüche, **dadurch gekennzeichnet, dass** das Verbindungselement (2, 7, 8, 41) eine Heiz- und Kühleinrichtung (42) zum Temperieren von das Verbindungselement (2, 7, 8, 41) durchströmendem Wasser aufweist, insbesondere umfassend ein elektrisches Heizelement und/oder einen, bevorzugt aktiv belüfteten, Radiator (43).

12. Verbindungselement (2, 7, 8, 41) nach einem der vorhergehenden Ansprüche, **dadurch gekennzeichnet, dass** das Verbindungselement (2, 7, 8, 41) ein elektrisches Schaltelement (11) zum reversiblen Unterbrechen der elektrischen Verbindung der elektrischen Anschlüsse (10) aufweist.

13. Verbindungselement (2, 7, 8, 41) nach einem der vorhergehenden Ansprüche, **dadurch gekennzeichnet, dass** das Verbindungselement (2, 7, 8, 41) eine, insbesondere einstellbare, Spannungsquelle (13) und/oder Spannungssenke (13) aufweist, welche elektrisch mit den elektrischen Anschlüssen (10) verbunden ist, zum Optimieren einer Spannungslage bei angeschlossenen betriebenen Elektrolysezellenstapeln (3, 4, 5) bezüglich eines vorgegebenen Kriteriums, insbesondere für eine maximierte Elektrolyseeffizienz.

14. Elektrolysevorrichtung (1, 41), welche ein Verbindungselement (2, 7, 8, 41) gemäß einem der vorhergehenden Ansprüche und zwei mit diesem Verbindungselement (2, 7, 8, 41) elektrische und mechanisch verbundene Elektrolysezellenstapel (3, 4, 5) aufweist.

15. Elektrolysevorrichtung (1, 41) nach Anspruch 14, **dadurch gekennzeichnet, dass** die Elektrolysevorrichtung (1, 41) zwei weitere, distale Verbindungselemente (7, 8) nach einem der vorhergehenden Ansprüche aufweist, welche an von dem die Elektrolysezellenstapel (3, 4, 5) verbindenden Verbindungselement (2, 7, 8, 41) abgewandten Enden der Elektrolysezellenstapel (3, 4, 5) angeordnet sind.
